Europäisches Patentamt

European Patent Office

Office européen des brevets

(11) Numéro de publication: **0 263 732**
**A1**

## (12) DEMANDE DE BREVET EUROPEEN

(21) Numéro de dépôt: **87402050.6**

(22) Date de dépôt: **15.09.87**

(51) Int. Cl.⁴: **B 60 K 11/04**

(30) Priorité: **30.09.86 FR 8613585**

(43) Date de publication de la demande:
**13.04.88 Bulletin 88/15**

(84) Etats contractants désignés: **DE ES FR GB IT**

(71) Demandeur: **VALEO CHAUSSON THERMIQUE**
**8 rue Louis Lormand-La Verrière**
**F-78320 Le Mesnil Saint Denis (FR)**

(72) Inventeur: **Legauyer, Philippe**
**25 rue Pradier**
**F-75019 Paris (FR)**

(74) Mandataire: **Madeuf, René Louis et al**
**Cabinet Madeuf 3, Avenue Bugeaud**
**F-75116 Paris (FR)**

(54) Combiné calandre échangeur de chaleur.

(57) Combiné calandre échangeur de chaleur dans lequel la calandre est constituée par un bâti (7) comprenant des traverses supérieure et inférieure (8, 9) ainsi qu'une virole (2) et des moyens de support d'au moins un ventilateur (4), caractérisé en ce que la calandre présente dans sa partie supérieure des pattes (10, 11) tournées dans le sens opposé à celui de la virole (2), les pattes délimitant entre elles une encoche (12) dont la largeur correspond à la longueur d'un échangeur de chaleur (15), des potences (24) et des moyens d'encliquetage élastiques (26, 27, 29) reliant l'échangeur de chaleur (15) aux pattes (10, 11) et une cale élastique (21) étant prévue entre la partie inférieure ou latérale de l'échangeur de chaleur (15) et un berceau (16) formé par la calandre (1).

Fig. 1

EP 0 263 732 A1

**Description**

Combiné calandre échangeur de chaleur.

La présente invention concerne un véhicule automobile et plus particulièrement elle est relative à un ensemble combiné incorporant au moins un échangeur de chaleur et au moins une partie de la caisse du véhicule.

La partie de la caisse du véhicule du combiné selon l'invention peut ne comprendre qu'un bâti muni d'un côté d'une virole et d'un support d'au moins un moto-ventilateur ou encore ce même bâti peut être réalisé d'une pièce avec d'autres parties de la caisse ou de la carrosserie du véhicule.

Etant donné que ce qui est dénommé dans ce qui suit par calandre peut être de forme complexe, ainsi qu'il est dit ci-dessus, des difficultés sont apparues pour la mise en place d'au moins un échangeur de chaleur destiné, en particulier, au refroidissement du fluide de circulation utilisé lui-même pour le refroidissement du moteur.

L'invention résout ce problème tout en rendant possible la mise en place de l'échangeur par des moyens uniquement mécaniques, c'est-à-dire sans intervention humaine en rendant possible que cette mise en place soit effectuée par un simple mouvement linéaire à trajectoire rectiligne.

Conformément à l'invention, le combiné calandre échangeur de chaleur dans lequel la calandre est constituée par au moins un bâti comprenant des traverses supérieure et inférieure est caractérisé en ce que la calandre présente une partie ouverte et des pattes rabattues tournées dans le sens opposé à celui d'une virole d'un ventilateur, les pattes délimitant entre elles l'ouverte dont la largeur correspond au moins à la longueur d'un ensemble plaque collectrice boîte à eau d'un échangeur de chaleur, des potences et des moyens d'encliquetage élastiques reliant l'échangeur de chaleur aux pattes et au moins une cale élastique supplémentaire étant prévue entre l'échangeur de chaleur et au moins un berceau formé par la calandre.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une élévation vue depuis l'arrière du combiné calandre échangeur de chaleur objet de l'invention.

La fig. 2 est une élévation latérale partie en coupe suivant la ligne II-II de la fig. 1.

1 désigne une calandre qui est réalisée entièrement en métal ou en matière synthétique.

Par "calandre", il faut entendre non seulement ce qui est représenté au dessin et décrit dans ce qui suit mais encore éventuellement des éléments tels qu'un bouclier formant pare-chocs et réalisé d'une seule pièce avec la calandre, ce bouclier pouvant lui-même former d'autres parties de la carrosserie d'un véhicule.

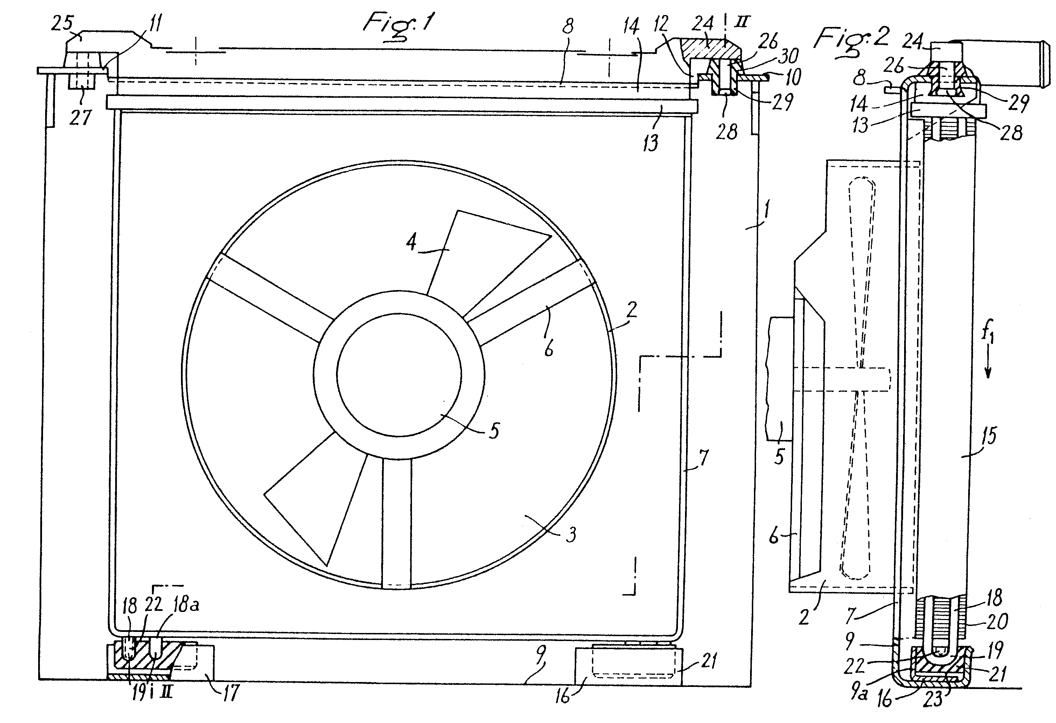

Dans la représentation des fig. 1 et 2, la calandre délimite une virole 2 présentant une ouverture 3 dans laquelle est disposé un ventilateur 4 entraîné par un moteur électrique 5 qui est supporté par des bras radiaux 6. La calandre 1 forme également un bâti 7 délimitant des traverses supérieure 8 et inférieure 9.

La traverse 8 présente à ses extrémités des pattes rabattues 10, 11 qui font saillie vers l'avant, au-delà de la virole 2, et qui délimitent entre elles une partie ouverte 12, par exemple une encoche dont la largeur est au moins égale à la longueur de l'ensemble plaque collectrice 13 - boîte à eau 14 d'un échangeur de chaleur 15 devant être porté par la calandre 1.

La traverse inférieure 9 du bâti 7 forme au moins un berceau 16 et de préférence deux berceaux 16, 17, comme cela est représenté. Les berceaux 16, 17 font également saillie vers l'avant de la calandre 1 au-delà de la virole 2. Un profilé 9a peut être fixé à la traverse 9 pour délimiter les berceaux 16, 17.

Dans l'exemple représenté, l'échangeur de chaleur 15 remplit la fonction d'échangeur refroidisseur pour le fluide de refroidissement du moteur d'un véhicule. L'échangeur illustré comporte des tubes 18, 18a, ... qui sont pliés en épingle en formant un coude 19 et qui sont enfilés dans des passages de tubes d'ailettes 20 ou autres éléments dissipateurs de chaleur.

Certains au moins des coudes 19 des tubes 18, 18a,... qui se trouvent en regard du ou des berceaux 16, 17 sont munis de cales élastiques 21 qui présentent aussi, comme cela est illustré en coupe aux fig. 1 et 2, des encoches 22 dans lesquelles les coudes 19 sont insérés à force de façon qu'ils soient bien emboîtés à frottement serré et que les cales élastiques 21 ne puissent pas s'échapper. Les berceaux 16, 17 lorsqu'ils sont fabriqués par moulage peuvent former directement les cales élastiques par exemple en délimitant des nervures serrant les tubes. Il est possible aussi que les cales élastiques soient formées par moulage sur les tubes.

Le dessin montre aussi que les cales élastiques 21 sont introduites dans les berceaux 16, 17 mais de façon à laisser libre un espace 23 avec le fond desdits berceaux. Lorsque les cales 21 sont formées par les berceaux, un espace est laissé libre entre leur fond et les tubes.

L'ensemble plaque collectrice 13 - boîte à eau 14 qui peut indifféremment être réalisé en une ou plusieurs pièces forme sur ses côtés latéraux des potences 24, 25 en dessous desquelles font saillie des pions 26, 27 éventuellement élastiques. Les pions 26, 27 présentent des évasements 28 ou autres saillies de retenue.

Des garnitures élastiques 29 sont mises en place dans des trous des pattes rabattues 10, 11. Les garnitures élastiques 29 présentent la forme de douille et délimitent une portée 30 prenant appui sur le dessus des pattes 10, 11.

Comme cela ressort de ce qui précède, pour mettre en place l'échangeur de chaleur 15, il suffit de l'engager dans l'encoche 12 de la traverse supérieure 8 puis de le déplacer vers le bas dans le sens de la flèche f₁ de la fig. 2. De cette manière, les cales élastiques 21 sont introduites dans le berceau 16 ou les berceaux 16, 17 et simultanément les pions 26, 27 sont engagés dans les garnitures élastiques 29. En fin de course, l'échangeur de chaleur 15 prend appui sur le dessus des garnitures élastiques 29 par ses potences 24, 25 et en même temps les cales élastiques 21 sont pincées entre les côtés latéraux des berceaux 16 et 17.

Les évasements 28 des pions 26, 27 tendent à écarter la partie des garnitures élastiques 29 qui se trouve en dessous des pattes 10, 11 de sorte que des vibrations ou d'autres contraintes ne peuvent pas permettre le soulèvement de l'échangeur de chaleur 15. Si on le désire les évasements 28 peuvent faire saillie au-delà des garnitures 29.

Lors des variations de température que subit l'échangeur de chaleur 15, les tubes 18, 18a ... peuvent se dilater plus ou moins mais ces variations de dilatation n'engendrent aucun phénomène néfaste car les cales élastiques 21 peuvent se déformer élastiquement et/ou sont déplacées à l'intérieur du ou des berceaux 16, 17 puisqu'il existe un espace libre 23 entre le dessous des cales et les berceaux.

Comme cela ressort de ce qui précède, l'échangeur est en fait relié élastiquement à la calandre 1 et maintenu par encliquetage et verrouillage de moyens élastiques de liaison.

On se sortirait pas du cadre de l'invention en remplaçant les moyens élastiques décrits par d'autres éléments, en particulier lorsque la calandre 1 est fabriquée en matière synthétique, les pattes 10, 11 peuvent former elles-mêmes les garnitures élastiques 29, c'est-à-dire qu'elles peuvent présenter des manchons éventuellement annelés intérieurement pour recevoir les pions 26, 27.

Il est possible aussi, comme exposé précédemment, que ce soit la calandre qui délimite la ou les cales élastiques 21, la calandre présentant alors des encoches pour recevoir les coudes des tubes 18, 18a ... .

On ne sortirait pas non plus du cadre de l'invention en prévoyant que les pions 26, 27 soient remplacés ou complétés par des pinces élastiques métalliques ou en matière plastique venant coiffer une barrette ou autre élément saillant des pattes 10, 11 de la traverse supérieure 8 de la calandre.

Bien que l'invention ait été décrite dans ce qui précède dans une réalisation comportant un échangeur de chaleur 15 à tube en épingle, elle peut être mise en oeuvre de semblable façon avec un échangeur conventionnel comprenant deux ensembles à plaque collectrice en boîte à eau. En effet, dans ce cas, la boîte à eau inférieure correspondrait aux coudes 19 des tubes 18, 18a ... et pourrait être maintenue de même manière dans les berceaux 16, 17.

L'invention n'est pas limitée à l'exemple de réalisation représenté et décrit en détail, car diverses modifications peuvent y être apportées sans sortir de son cadre. En particulier, elle peut être mise en oeuvre chaque fois que la calandre présente un couloir ou puits pour recevoir l'échangeur de chaleur sans que le dessous ou un côté de celui-ci soit accessible en position montée. Il est en effet possible dans le cadre de l'invention que les pattes 10, 11 se trouvent sur un côté de la calandre et que les berceaux 16, 17 se trouvent de la sorte sur l'autre côté latéral de la calandre. Cette dernière disposition permet que les tubes 18 soient disposés horizontalement.

## Revendications

1 - Combiné calandre échangeur de chaleur dans lequel la calandre est constituée par au moins un bâti (7) comprenant des traverses supérieure et inférieure, caractérisé en ce que la calandre présente une partie ouverte (12) et des pattes rabattues (10,11) tournées dans le sens opposé à celui d'une virole (2) d'un ventilateur (4), les pattes délimitant entre elles l'ouverture (12) dont la largeur correspond au moins à la longueur d'un ensemble plaque collectrice (13) - boîte à eau (14) d'un échangeur de chaleur (15), des potences (24) et des moyens d'encliquetage élastiques (26,27,29) reliant l'échangeur de chaleur (15) aux pattes (10,11) et au moins une cale élastique supplémentaire (21) étant prévue entre l'échangeur de chaleur (15) et au moins un berceau (16) formé par la calandre (1).

2 - Combiné calandre échangeur de chaleur suivant la revendication 1, caractérisé en ce que les potences (24,25) pour relier l'échangeur (15) à la calandre (1) sont formées par l'ensemble plaque collectrice (13) -boîte à eau (14).

3 - Combiné calandre échangeur de chaleur suivant la revendication 1 ou 2, caractérisé en ce que le moyen d'encliquetage élastique comporte des pions (26, 27) munis d'évasements ou autres saillies (28) éventuellement élastiques, lesdits pions étant engagés et verrouillés dans des garnitures élastiques (29) également prévues entre les potences (24,25) et les pattes rabattues (10,11).

4 - Combiné calandre échangeur de chaleur suivant l'une des revendications 1 à 3, caractérisé en ce que le ou les berceaux (16, 17) contiennent chacun au moins une cale élastique (21) maintenant la partie inférieure ou latérale de l'échangeur (15).

5 - Combiné calandre échangeur de chaleur suivant l'une des revendications 1 à 4, caractérisé en ce que l'échangeur (15) est du type à tubes (18, 18a, ...) pliés en épingle, les coudes (19) desdits tubes étant engagés à force dans des encoches (22) de la ou des cales élastiques (21).

6 - Combiné calandre échangeur de chaleur suivant l'une des revendications 1 à 5, caractérisé en ce que la ou les cales élastiques (21) délimite un espace (23) avec le fond du ou des berceaux (16, 17) pour permettre la libre dilatation des tubes (18, 18a,...).

7 - Combiné calandre échangeur de chaleur suivant l'une des revendications 1 à 6, caractérisé en ce que la calandre (1) fait partie d'un ensemble de carrosserie d'un véhicule avec lequel elle est réalisée d'une seule pièce.

8 - Combiné calandre échangeur de chaleur suivant l'une des revendications 1 ou 2 et 4 à 7, caractérisé en ce que les moyens d'encliquetage élastique reliant l'échangeur de chaleur (15) aux pattes (10, 11) de la calandre 1 comportent des pinces élastiques en métal ou matière plastique.

9 - Combiné calandre échangeur de chaleur suivant l'une des revendications 1 à 8, caractérisé en ce que les moyens d'encliquetage élastique (26, 27, 29) sont directement formés par la calandre.

10 - Combiné calandre échangeur de chaleur suivant l'une des revendications 1 à 9, caractérisé en ce que les cales élastiques (21) sont formées directement par la calandre.

11 - Combiné calandre échangeur de chaleur suivant l'une des revendications 1 à 10, caractérisé en ce que la calandre est fabriquée en matière synthétique et forme elle-même les garnitures élastiques (29).

Fig.1

Fig.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A- 877 353 (SERCK RADIATORS)<br>* En entier *<br>--- | 1 | B 60 K 11/04 |
| A | DE-A-2 634 990 (AUDI)<br>* En entier *<br>--- | 1 | |
| A | FR-A-2 336 268 (DAIMLER-BENZ)<br>* En entier *<br>----- | 1 | |
| | | | **DOMAINES TECHNIQUES RECHERCHES (Int. Cl.4)**<br><br>B 60 K<br>F 01 P<br>F 28 F |

Le présent rapport a été établi pour toutes les revendications

| Lieu de la recherche | Date d'achèvement de la recherche | Examinateur |
|---|---|---|
| LA HAYE | 05-01-1988 | PIRIOU J.C. |